# EUROPEAN PATENT SPECIFICATION

(11) **EP 0 346 856 B1**
(45) Date of publication and mention of the grant of the patent: **24.02.1993**
(21) Application number: 89110730.2
(22) Date of filing: 13.06.1989
(51) Int. Cl.: H04N 5/04

(54) **Method and circuits for the processing and transmission of a clock signal, in particular of the video synchronization frequency**
Verfahren und Schaltung zur Verarbeitung und Übertragung eines Taktsignals, speziell der Videosynchronisationsfrequenz
Procédé et circuit pour le traitement et le transfert d'un signal de rythme, particulièrement de la fréquence de synchronisation vidéo

(30) Priority: 14.06.1988 IT 2095288
(43) Date of publication of application: 20.12.1989
(73) Proprietor: ALCATEL ITALIA Società per Azioni, 20149 Milano (IT)
(72) Inventor: Cucchi, Silvio, I-20083 Gaggiano (MI) (IT); Carbone, Stefano, I-20138 Milano (IT)
(74) Representative: Strehl Schübel-Hopf Groening & Partner

(56) References cited:
- EP-A- 0 126 586
- US-A- 3 530 238
- US-A- 4 599 649

## Description

The invention refers to a method and circuit for processing and transmitting a clock signal having a period 1/Fsr and being affected by jitter, wherein the period of the clock signal is measured by means of a sample signal having a frequency Fc.

The invention is particularly applicable to the video synchronisation signal.

In general, for transmitting the video frequency or line frequency or frame frequency, or a signal related to these frequencies, a comparison is performed between such frequency value and a sample frequency that is known also at the receiver. Typically, the sample frequency is related to the frequency at which the data are transmitted.

The following methods are known in the art:
(1) Direct sampling of the video frequency with a sampling frequency known at receiver. The problem of this method is that a high bit rate is required to achieve low distortion of the reconstructed signal.
(2) Phase comparison between the video frequency and the sampling frequency. The transmission is done by, e.g., sending a "0" when $\text{-π ≦ φ ≦ 0}$ and a "1" when $\text{0 ≦ φ ≦ π}$ . Drawbacks of this method reside in the variable bit rate and the difficulty of suppressing the comparison jitter.
(3) Discrete measurement of the video frequency period by means of a sample frequency. A problem in this method resides in the fact that in the presence of jitter the information to be transmitted is of a multilevel type, which increases the bit rate.

EP-A-0,126,586 discloses a circuit for synchronizing a television input frame pulse with a reference frame pulse by generating a reverse frame pulse, which is applied to a television signal processor for adjusting the phase of the television signal passed therethrough. The operation of this known circuit is thus similar to method (2) above.

The present invention is based on method (3) above, but requires the transmission of minimum information only, i.e. just one single bit for each individual period, while taking account of the jitter in the frequency of the clock signal (which may be a video signal).

The method and circuit meeting this object are set forth in claims 1 and 3, respectively.

In general, the ratio Fc/Fsr between the frequency of the sample signal and that of the clock signal is a decimal number of the form n.m, i.e. a number between n and n+1. It is therefore possible to convert the single measured value to an integer equal to n or n+1. This can be done for instance by means of a circuit that detects the rising (or falling) slopes of the clock signal having the frequency Fsr, and initializes a counter at the value 0. This counter, which operates at the frequency Fc of the sample signal, thus provides a measured value, i.e. the final count, which is either n or n+1. The transmission is done by, e.g., transmitting a "0" in case the final count is n, and a "1" in case the final count is n+1.

All these considerations are valid under the condition that the frequency Fsr is at a nominal value.

In the presence of jitter in Fsr, the measured value or count can have values other than n and n+1. In this case, instead of transmitting the actual measured value of the counter when it terminates counting, which would certainly require more than one bit, the invention still transmits either n or n+1, depending on whether the final count is ≦ n or ≧ n+1, and calculates a definite error as the actual count -n or n+1 on the basis of what is transmitted.

The error, which is a positive or negative quantity, is added to the final count of the subsequent cycle. On the thus obtained magnitude, a decision is made as to whether n or n+1 is transmitted.

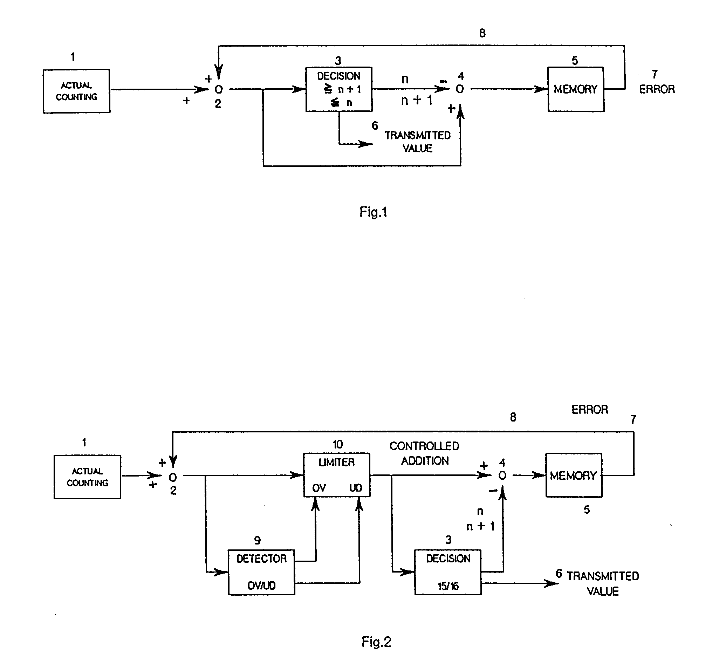

The block scheme illustrated in Figure 1 refers to a circuit including an actual counting stage 1, an adder 2 in which the sum is formed between the output count from the counting stage 1 and an error 7, a decision stage 3, an adder 4, in which the difference is formed between the sum produced by the adder 2 and the transmitted value 6, and a memory 5 for storing the error 7, which is fed back to the adder 2 by means of a loop 8.

For instance, when a negative error has been accumulated (in transmitting n), it is necessary for bringing the error to positive values that the counting ends at values ≧ n+1, while n is still transmitted. This may be shown as follows:

| | | | | | | | | | | | | | |
|---|---|---|---|---|---|---|---|---|---|---|---|---|---|
| Tr'd value | n | n+1 | n | n | n | n | n | n | n | n | n | n | n+1 |
| Act. count | n | n+1 | n | n-1 | n-1 | n-2 | n | n | n+1 | n+2 | n+1 | n | n+1 |
| Error | 0 | 0 | 0 | -1 | -2 | -4 | -4 | -4 | -3 | -1 | 0 | 0 | 0 |

Thus, on the basis of an information which has one bit for each period of Fsr, the remote terminal can reconstruct, on the average, the video synchronisation frequency (clock signal). This is possible due to the integration of the error caused by the jitter and due to the suppression of the latter.

The applicant's preceding application EP-A-0,271,846, published 22.06.1988, describes a system for processing a television signal based on encoding by means of a 1- or 2-dimensional transform, thereby obtaining a high compression of the information to be transmitted. The following description refers to a circuit implementation by means of a multiplexer at, e.g., 34,368 kb/s.

The counter measuring the video synchronisation frequency does not perform a counting from 0 up to n or n+1; instead, it is preferred for simplifying the circuitry, to use a 5-bit counter that is saturated many times in one period of Fsr.

Further, to realize the arithmetics in a simple manner, it is desired that the counting ends nominally at 15 or 16; this requires the counter to be initialized at a particular value calculated according to Fsr and Fc. Assuming for example Fsr = 31,250 Hz (2 x 15,625 Hz) and Fc = 4.296 MHz, it is necessary to count 137 or 138 clock strokes at the frequency Fc and then to initialize the counter at 7, so that the final count will be 15 or 16. Considering the jitter in Fsr and the value of Fc, a counting is acceptable that ends at values between 3 and 28; in other cases, final counts of 0, 1 and 2 or 29, 30 and 31 will cause an external alarm.

Still considering the tolerated jitter, it is assumed that in conditions of correct functioning the accumulated error is between -31 and 31. An overflow situation occurs if the sum of the actual count and the error is ≧ 48, and an underflow situation occurs if the sum of the actual count and the error is ≦ -17. Both overflow and underflow situations generate an external alarm.

In the case of overflow and underflow, the sum is controlled to result in the following:
-16 ≦ controlled sum ≦ 47.

A block diagram of a circuit providing this result is illustrated in Figure 2.

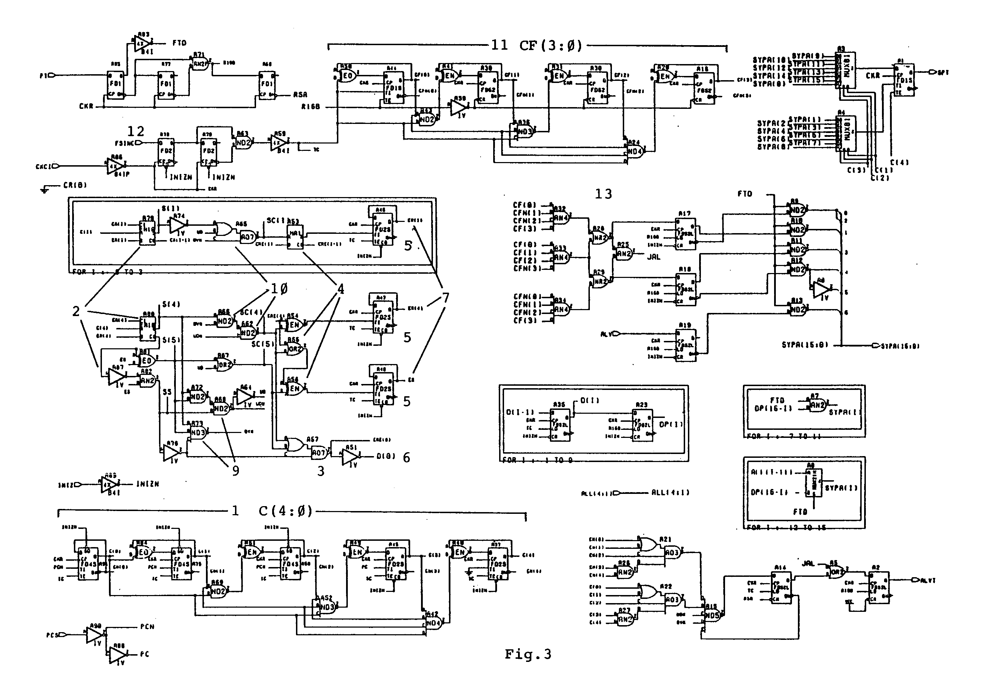

There is another counter (e.g. 11 in Figure 3a) that counts the number of transitions of the video synchronisation frequency (clock signal) within a predetermined interval, which may be specifically the frame period of the multiplexer. On the basis of the jitter in Fsr and of the frame frequency (4 kHz in the present case), the number of transitions may be 7, 8 or 9; in any other case, an alarm will be caused.

The latter information, that requires 2 bits for being transmitted, is protected by transmitting a suitable 6-bit code (e.g. 13 in Figure 3d); in receiving this code, the information is recovered by a 2/3 majority decision.

Eventually, nine information bits are always transmitted, of which 7, 8 or 9 are significant depending on the 6 bits obtained from the transition counter and another external alarm bit from the circuit board. There are thus 16 information bits per one frame at 4 kHz, resulting in a total flow at 64 kHz.

Figures 3a to 3e together show a detailed circuit structure of this particular embodiment. This circuit includes a measuring counter 1 with 5 bits C0, C1, C2, C3 and C4, a counter 11 with 4 bits CF0, CF1, CF2 and CF3 for counting the transitions of the video synchronisation frequency FSINC within the frame period, and a circuit 12 which detects the transitions (leading slopes) of FSINC.

Figure 3b specifically shows the circuit that carries out the real algorithm and which includes the adder 2 for forming an algebraic sum (using a representation of negative numbers in two's complement) of the count from the counter 1 and the error 7 - ES, ER(4), ER(3), ER(2), ER(1) and ER(0) -, followed by the limiter 10 which is controlled by the underflow and overflow signals UD and OV. Connected to the limiter 10 is an adder 4 for adding the controlled sum and the transmitted data D (0), the output of the adder 4 forming the future error. A logic circuit 16 necessary for encoding the number of transitions of FSINC within the frame period and for preparing the 16 bits SYPA (15 : 0) to be sent within the frame, completes this embodiment.

## Claims

1. A method for processing and transmitting a clock signal affected by jitter, by measuring the period 1/Fsr of the clock signal with a sample signal having a frequency Fc, comprising the steps of:
taking a discrete binary measurement (1) of the ratio Fc/Fsr,
processing the measured ratio Fc/Fsr to compress and discharge the jitter in the signal by means of a circuit (2, 4, 5, 8) with a feedback loop (8) to feed back an error (7) introduced by the jitter and thereby accumulate and integrate said error, and
generating (3) a single binary digit ("0" or "1") based upon the sum of the measured ratio Fc/Fsr and the error, said binary digit representing each period of the clock signal.

2. The method of claim 1, wherein a binary "0" is generated when the sum of the measured ratio Fc/Fsr and the error is ≦ n (n being an integer), and a binary "1" is generated when said sum is ≧ n+1, or vice versa.

3. A circuit for processing and transmitting a clock signal affected by jitter, by measuring the period 1/Fsr of the clock signal with a sample signal having a frequency Fc, comprising
means (1) for taking a discrete binary measurement of the ratio Fc/Fsr,
means (2, 4, 5, 8) for applying an algorithm to said ratio Fc/Fsr to compress and discharge the jitter, comprising a feedback loop (8) for feeding back an error (7) introduced by said jitter, thereby accumulating and integrating the error, and
means (3) for generating a single binary digit ("0" or "1") based upon the sum of the measured ratio Fc/Fsr and the error (7), said binary digit representing each period of the clock signal.

4. The circuit of claim 3, including a saturation counter for measuring the period 1/Fsr of the clock signal.

5. The circuit of claim 4, including a counter which counts the number of transitions of said saturation counter thereby determining the ratio Fc/Fsr corresponding to the number of transitions of said clock signal within a predetermined time interval.

6. The circuit of claim 4 or 5, wherein said algorithm applying means comprises an adder (2) forming an algebraic sum of the output of said saturation counter, corresponding to the period 1/Fsr of the said clock signal, with said accumulated and integrated jitter error.

7. The circuit of claim 6, further comprising an alarm for indicating an underflow or overflow of said adder (2).

## Patentansprüche

1. Verfahren zum Verarbeiten und Übertragen eines durch Synchronisationsstörung beeinträchtigten Taktsignals, wobei die Periode 1/Fsr des Taktsignals mit einem Probensignal der Frequenz Fc gemessen wird, umfassend die folgenden Schritte:
es wird eine diskrete binäre Messung (1) des Verhältnisses Fc/Fsr vorgenommen;
das gemessene Verhältnis Fc/Fsr wird verarbeitet, um die Synchronisationsstörung mittels einer Schaltung (2, 4, 5, 8) zu komprimieren und entfernen, wobei die Schaltung eine Rückkopplungsschleife (8) aufweist, die einen durch die Synchronisationsstörung eingeleiteten Fehler (7) rückkoppelt und dadurch den Fehler akkumuliert und integriert; und
aufgrund der Summe aus dem gemessenen Verhältnis Fc/Fsr und dem Fehler wird eine jeweils die Periode des Taktsignals angebende einzelne Binärziffer ("0" oder "1") erzeugt.

2. Verfahren nach Anspruch 1, wobei eine binäre "0" erzeugt wird, wenn die Summe aus dem gemessenen Verhältnis Fc/Fsr und dem Fehler ≦ n (n: ganze Zahl) ist, und eine binäre "1" erzeugt wird, wenn die besagte Summe ≧ n + 1 ist, oder umgekehrt.

3. Schaltung zur Verarbeitung und Übertragung eines durch Synchronisationsstörung beeinträchtigten Taktsignals, wobei die Periode 1/Fsr des Taktsignals mit einem Probensignal der Frequenz Fc gemessen wird, umfassend
eine Einrichtung (1) zur Durchführung einer diskreten binären Messung des Verhältnisses Fc/Fsr,
eine Einrichtung (2, 4, 5, 8) zur Anwendung eines Algorithmus auf das Verhältnis Fc/Fsr zur Unterdrückung und Entfernung der Synchronisationsstörung, wobei die Einrichtung eine Rückkopplungsschleife (8) aufweist, um einen durch die Synchronisationsstörung eingeleiteten Fehler (7) rückzukoppeln und dadurch den Fehler zu akkumulieren und integrieren, und
eine Einrichtung (3) zur Erzeugung einer jeweils die Periode des Taktsignals angebenden einzelnen Binärziffer ("0" oder "1") aufgrund der Summe aus dem gemessenen Verhältnis Fc/Fsr und dem Fehler (7).

4. Schaltung nach Anspruch 3 mit einem Sättigungszähler zur Messung der Periode 1/Fsr des Taktsignals.

5. Schaltung nach Anspruch 4 mit einem Zähler, der die Anzahl von Durchgängen des Sättigungszählers zählt und somit das Verhältnis Fc/Fsr entsprechend der Anzahl der Durchgänge des Taktsignals innerhalb eines vorgegebenen Zeitintervals bestimmt.

6. Schaltung nach Anspruch 4 oder 5, wobei die Einrichtung zur Anwendung des Algorithmus einen Addierer (2) umfaßt, der eine algebraische Summe aus dem der Periode 1/Fsr des Taktsignals entsprechenden Ausgang des Sättigungszählers und dem akkumulierten und integrierten Synchronisationsstörungs-Fehler bildet.

7. Schaltung nach Anspruch 6, ferner umfassend eine Alarmeinrichtung zur Anzeige einer Unterschreitung oder eines Überlaufs des Zählers (2).

## Revendications

1. Procédé pour le traitement et la transmission d'un signal d'horloge affecté par un sautillement, en mesurant la période 1/Fsr du signal d'horloge avec un signal-échantillon ayant une fréquence Fc, comportant les étapes de:
mesure d'une valeur binaire discrète (1) du rapport Fc/Fsr,
traitement du rapport Fc/Fsr mesuré pour comprimer et éliminer le sautillement du signal à l'aide d'un circuit (2, 4, 5, 8) avec une boucle de réaction (8) pour réinjecter une erreur (7) introduite par le sautillement et, de ce fait, cumuler et intégrer ladite erreur, et
production d'un seul chiffre binaire ("0" ou "1) à partir de la somme du rapport Fc/Fsr mesuré et de l'erreur, ledit chiffre binaire représentant chaque période du signal d'horloge.

2. Procédé selon la revendication 1, dans lequel un "0" binaire est produit lorsque la somme du rapport Fc/Fsr mesuré et de l'erreur est ≦ n (n étant un entier), et un "1" binaire est produit lorsque ladite somme est ≧ n+1, ou inversement.

3. Circuit pour le traitement et la transmission d'un signal d'horloge affecté par un sautillement, en mesurant la période 1/Fsr du signal d'horloge avec un signal-échantillon ayant une fréquence Fc, comprenant
un moyen (1) pour mesurer une valeur binaire discrète du rapport Fc/Fsr,
un moyen (2, 4, 5, 8) pour appliquer un algorithme audit rapport Fc/Fsr afin de comprimer et d'éliminer le sautillement, comportant une boucle de réaction (8) pour réinjecter une erreur (7) introduite par ledit sautillement et, de ce fait, cumuler et intégrer l'erreur, et
un moyen (3) pour produire un seul chiffre binaire ("0" ou "1") à partir de la somme du rapport Fc/Fsr mesuré et de l'erreur (7), ledit chiffre binaire représentant chaque période du signal d'horloge.

4. Circuit selon la revendication 3, comportant un compteur de saturation pour mesurer la période 1/Fsr du signal d'horloge.

5. Circuit selon la revendication 4, comportant un compteur qui compte le nombre de transitions dudit compteur de saturation en déterminant de ce fait le rapport Fc/Fsr correspondant au nombre de transitions dudit signal d'horloge pendant un laps de temps prédéterminé.

6. Circuit selon la revendication 4 ou 5, dans lequel ledit moyen d'application d'algorithme comprend un additionneur (2) formant une somme algébrique de la valeur de sortie dudit compteur de saturation, correspondant à la période 1/Fsr dudit signal d'horloge, avec ladite erreur cumulée et intégrée due au sautillement.

7. Circuit selon la revendication 6, comportant en outre une alarme pour indiquer un dépassement de capacité positif ou négatif de l'additionneur (2).
